# EUROPÄISCHE PATENTANMELDUNG

(11) **EP 1 313 089 A2**
(43) Veröffentlichungstag der Anmeldung: **21.05.2003**
(21) Anmeldenummer: 02024139.4
(22) Anmeldetag: 30.10.2002
(51) Int. Cl.: G10K 11/00, G01H 11/00

(54) **Messgerät zur Erfassung von Schwingungen, insbesondere von Druckpulsen eines flüssigen Fluids**

(30) Priorität: 20.11.2001 DE 10156588
(71) Anmelder: KSB Aktiengesellschaft, 67227 Frankenthal (DE)
(72) Erfinder: Hellmann, Heinz-Dieter, Prof. Dr., 37661 Kaiserlautern (DE); Kollmar, Dirk, 68542 Heddesheim (DE)

(57) **Zusammenfassung**

Die Erfindung betrifft ein Meßgerät zur Erfassung von Schwingungen, insbesondere von Druckpulsationen eines flüssigen Fluids, enthaltend ein Gehäuse mit einer membranartigen Wandfläche, einen im Gehäuse angeordneten abgedichteten Innenraum zur Aufnahme eines Signalwandlers und wobei der Innenraum mit Gas gefüllt ist. Der Signalwandler ist als eine zur Aufnahme menschlicher Lautäußerungen ausgelegte Mikrofonkapsel ausgebildet.

## Beschreibung

Die Erfindung betrifft ein Meßgerät zur Erfassung von Schwingungen, insbesondere von Druckpulsationen eines flüssigen Fluids, enthaltend ein Gehäuse mit einer membranartigen Wandfläche, einen im Gehäuse angeordneten abgedichteten Innenraum zur Aufnahme eines Signalwandlers und wobei der Innenraum mit Gas gefüllt ist.

In Maschinen entstehen Schwingungen meistens aufgrund dynamischer Vorgänge. Hierbei können die unterschiedlichsten Ursachen Auslöser für das Entstehen von Schwingungen sein. Es ist möglich, daß die Schwingungen nur aus einer Frequenz bestehen, oder sich aus mehreren Schwingungskomponenten unterschiedlicher Frequenzen zusammensetzt. Mit Hilfe einer Frequenzanalyse wird bei unterschiedlichen Frequenzen eine Grundlage für eine diagnostische Schwingungsmessung geschaffen. Die Kenntnis der spektralen Zusammensetzung eines Signals erlaubt dem Fachmann Rückschlüsse über den Zustand einer Maschine zu treffen.

Zur Erfassung von Schwingungen werden in überwiegender Weise piezo-elektrische Beschleunigungsaufnehmer verwendet. Diese lassen sich für breite Frequenz- und Dynamikbereiche einsetzen und zeigen dabei über den gesamten Meßbereich ein nahezu lineares Verhalten auf. Dabei zeigen sie über einen Langzeitraum eine gute Zuverlässigkeit unter Beibehaltung der Messeigenschaften auf. Ein weiterer Vorteil besteht darin, daß ein Piezoelement unter Belastung einen Strom erzeugt, und somit von einer Energiequelle unabhängig ist. Sie erzeugen eine elektrische Ladung, wenn das piezo-elektrische Material entweder komprimiert oder auf Scherung belastet wird. Ein dabei produziertes Stromsignal dient dann als Maß für die Schwingungsbeschleunigung. Jedoch sind solche Beschleunigungsaufnehmer sehr teuer, da sie in relativ kleinen Stückzahlen hergestellt werden.

Wesentlich für eine genaue Erfassung einer Schwingung ist auch die Wahl des Einbauortes eines Schwingungssensors und seine Befestigung an einem zu untersuchenden Bauteil. Die Ankopplung eines solchen Sensors an das zu untersuchende System hat dabei erheblichen Einfluß auf das Meßergebnis.

Zur Untersuchung von Schwingungen in strömungsführenden Systemen finden solche Beschleunigungsaufnehmer und auch Dehnungsmeßstreifen Verwendung. Für die ständige Überwachung von solchen Systemen wird daher nach einem einfach herzustellenden Schwingungssensor gesucht, der bei einem geringen Preis eine hohe Zuverlässigkeit und Meßgenauigkeit gewährleistet.

Die Lösung dieses Systems sieht vor, daß der Signalwandler als eine zur Aufnahme menschlicher Lautäußerungen ausgelegte Mikrofonkapsel ausgebildet ist.

Durch die Verwendung einer in großen Stückzahlen kostengünstig produzierten Mikrofonkapsel für Mobiltelefone oder Hörgeräte kann in einfachster Weise ein industriell verwendbarer gehäuster Industriesensor gebaut werden. Ein Gehäuse zur Aufnahme einer solchen Mikrofonkapsel kann als Automatenteil sehr leicht hergestellt werden. Die Mikrofonkapsel wird mit den daran befestigten Kabeln dichtend in einen Innenraum des Gehäuses unter Beibehaltung eines gas- oder luftgefüllten Raumes angeordnet. Somit verbleibt innerhalb des Innenraumes eine Luftsäule zur Übertragung von Schwingungen. Durch eine membranartige Ausbildung einer Gehäusewand des Schwingungssensors wird eine aufgenommene Schwingung übertragen. Durch die Schwingung der membranartigen Wandfläche, die gewöhnlich als Bodenfläche ausgebildet ist, wird die Luftsäule im Innenraum ebenfalls zur Schwingung angeregt. Der dabei erzeugte Schalldruck ist proportional zur Beschleunigung der membranartigen Wandfläche, so daß die Mikrofonkapsel die Schwingbeschleunigung des Grundkörpers, an dem der Sensor angeordnet ist, mißt.

Nach Ausgestaltungen der Erfindung kann die membranartige Wandfläche spanabhebend aus dem Gehäuse herausgearbeitet oder als separates Bauteil ausgebildet und dichtend mit dem Gehäuse verbunden sein. Bei letzterem sind verschiedene bekannte Befestigungsverfahren möglich. Mit Hilfe von Dichtungselementen und/oder Vergußmassen kann die Mikrofonkapsel dichtend innerhalb des Sensors und unter Beibehaltung eines gas- oder luftgefüllten Raumes angeordnet sein.

Weitere Ausgestaltungen der Erfindung sind in den Unteransprüchen beschrieben.

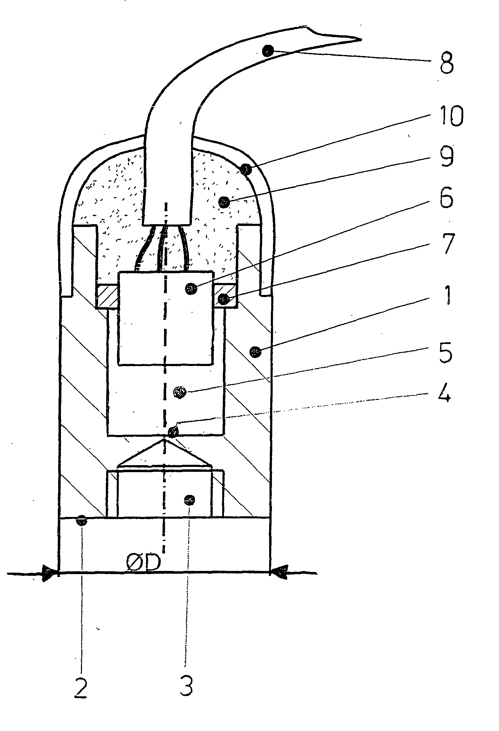

Ein Ausführungsbeispiel des Meßgerätes ist in der Zeichnung dargestellt und wird im folgenden näher beschrieben.

Die Zeichnung zeigt einen Sensor mit einem Gehäuse 1, welches in einfachster Weise als Drehteil, Tiefziehteil oder anders ausgebildet sein kann. Es eignet sich daher zur Herstellung auf automatischen Produktionsmaschinen, wie Drehautomaten, Pressen und dergleichen. An seiner einen Stirnseite 2 verfügt das Gehäuse 1 über eine Aufnahme 3, hier als Gewindebohrung ausgebildet, mit der eine gute Ankopplung an ein zu untersuchendes Bauteil gewährleistet wird. Das Gehäuse 1 verfügt weiter über eine membranartige Wandfläche 4, welche durch eine aufgenommene Schwingung einer zu untersuchenden Maschine ebenfalls zur Schwingung angeregt wird. Form und Ausbildung dieser Wandfläche 4 können auf vielfältiger Art und Weise erfolgen. Im gezeigten Beispiel ist dies durch eine spanabhebende Bearbeitung im Wege eines Bohrvorganges verwirklicht worden.

Im Innenraum 5 des Gehäuses 1 ist als Signalwandler eine Mikrofonkapsel 6 abgedichtet angeordnet. Deren Aufnahmefläche ist mit Abstand zur membranartigen Wandfläche 4 angeordnet, um somit die Beibehaltung einer Luft- oder Gassäule im Innenraum 5 beizubehalten. Die dichtende Anordnung der Mikrofonkapsel 6 kann durch direkte Einpressung in das Gehäuse 1 oder durch Zwischenschaltung eines hier dargestellten Dichtungselementes 7 erfolgen. Die Mikrofonkapsel 6 ist mit einem Anschlußkabel 8 verbunden, mit dessen Hilfe die Ausgangsspannung der Mikrofonkapsel, welche proportional zum aufgenommenen Schalldruck ist, an ein nachgeschaltetes Gerät zur Signalverarbeitung geleitet wird. Eine Vergußmasse 9 dient zur weiteren Abdichtung der eingebauten Mikrofonkapsel 6 und gleichzeitig zur Fixierung und Zugentlastung des Anschlußkabels 8. Die Vergußmasse 9 kann innerhalb einer Abdeckung 10 angeordnet sein, welche das Gehäuse umgibt. Die Abdeckung 10 kann dabei als metallisches Bauteil oder als ein Kunststoffbauteil ausgebildet sein. Durch die rotationssymmetrische Ausbildung, gekennzeichnet durch Ø D, des Gehäuses 1 kann dieses auch in entsprechend gestaltete Bohrungen einer zu untersuchenden Maschine angeordnet werden.

Ein derartig aufgebauter Schwingungssensor liefert für eine Dauerüberwachung von in Anlagen installierten Strömungsmaschinen eine ausreichend hohe Meßgenauigkeit. Da der von der Mikrofonkapsel aufgenommene Schalldruck proportional zur Beschleunigung der membranartigen Wandfläche ist, mißt ein solcher Sensor die Schwingbeschleunigung des mit ihm gekoppelten Grundkörpers bzw. des zu untersuchenden Maschinenteiles.

## Patentansprüche

1. Meßgerät zur Erfassung von Schwingungen, insbesondere von Druckpulsationen eines flüssigen Fluids, enthaltend ein Gehäuse mit einer membranartigen Wandfläche, einen im Gehäuse angeordneten abgedichteten Innenraum zur Aufnahme eines Signalwandlers und wobei der Innenraum mit Gas gefüllt ist, **dadurch gekennzeichnet, daß** der Signalwandler als eine zur Aufnahme menschlicher Lautäußerungen ausgelegte Mikrofonkapsel (6) ausgebildet ist.

2. Meßgerät nach Anspruch 1, **dadurch gekennzeichnet, daß** die Mikrofonkapsel (6) dichtend im Gehäuse (1) angeordnet ist.

3. Meßgerät nach Anspruch 1 oder 2, **dadurch gekennzeichnet, daß** die Mikrofonkapsel (6) mit einem Dichtungselement (7) dichtend im Gehäuse (1) angeordnet ist.

4. Meßgerät nach Anspruch 1, 2 oder 3, **dadurch gekennzeichnet, daß** die Mikrofonkapsel (6) durch eine Vergußmasse (9) dichtend im Gehäuse (1) gehalten ist.

5. Meßgerät nach Anspruch 4, **dadurch gekennzeichnet, daß** die Vergußmasse die Mikrofonkapsel (6) und deren Anschlußkabel (8) teilweise dichtend umgibt.

6. Meßgerät nach einem der Ansprüche 1 bis 5, **dadurch gekennzeichnet, daß** die membranartige Wandfläche (4) spanabhebend aus dem Gehäuse (1) heraus gearbeitet ist.

7. Meßgeräte nach einem der Ansprüche 1 bis 5, **dadurch gekennzeichnet, daß** die membranartige Wandfläche (4) als separates Bauteil ausgebildet und dichtend mit dem Gehäuse (1) verbunden ist.

8. Meßgerät nach einem der Ansprüche 1 bis 5, **dadurch gekennzeichnet, daß** die Wandstärke und Wandform der membranartigen Wandfläche (4) dem zu untersuchenden Schwingungsbereich angepaßt ist.

9. Meßgerät nach einem der Ansprüche 1 bis 8, **dadurch gekennzeichnet, daß** das Gehäuse (1) als ein Automatenbauteil ausgebildet ist.
